# FASCICULE DE BREVET EUROPEEN

(11) **EP 0 969 641 B1**
(45) Date de publication et mention de la délivrance du brevet: **26.07.2006**
(21) Numéro de dépôt: 99401255.7
(22) Date de dépôt: 26.05.1999
(51) Int. Cl.: H04M 1/02

(54) **Téléphone mobile avec écran tactile et clavier**
Mobiltelefon mit Berührungsbildschirm und Tastatur
Mobile telephone with sensitive touch screen and keypad

(30) Priorité: 01.07.1998 FR 9808586
(43) Date de publication de la demande: 05.01.2000
(73) Titulaire: SAGEM Communication, 75015 Paris (FR)
(72) Inventeur: Romao, Fernando M., Cabinet Christian Schmit, 95000 Gergy (FR)
(74) Mandataire: Schmit, Christian Norbert Marie

(56) Documents cités:
- EP-A- 0 796 026
- WO-A-97/41677
- WO-A-98/15094
- GB-A- 2 059 653
- GB-A- 2 291 560
- GB-A- 2 297 662
- US-A- 5 646 649
- US-A- 5 719 936

## Description

La présente invention a pour objet un téléphone mobile muni d'un écran tactile et d'un clavier mécanique. Elle a pour objet de simplifier la réalisation de ce téléphone mobile tout en lui conservant l'intérêt des deux technologies.

Dans le domaine des téléphones mobiles, notamment domestiques, on a d'abord eu affaire à des appareils munis d'une manière élémentaire d'un microphone et d'un haut-parleur. L'adjonction d'un clavier disposé sur une face avant (celle qui est en regard de l'utilisateur quand il parle dans le téléphone mobile) ou sur une face arrière n'a été réalisée que par la suite notamment pour des utilisations avec un réseau public de téléphonie mobile. Les perfectionnements constants et les requêtes des utilisateurs ont amené les concepteurs à prévoir par ailleurs des téléphones mobiles avec écran. Ces écrans permettent d'afficher des messages reçus de même que de guider l'utilisateur dans la sélection de toutes les fonctions envisageables avec son téléphone mobile. Une dernière évolution a consisté à munir les téléphones mobiles d'un écran tactile. L'utilisation d'un écran tactile est bien plus puissante que l'utilisation d'un clavier mécanique, même assisté d'un écran, car la perception intuitive des actions à entreprendre par l'utilisateur est immédiate avec un écran tactile. On appuie là où est signalée la fonction à choisir. La différence d'ergonomie est du même type que celles qu'on perçoit entre l'utilisation d'une souris sur un écran d'un micro-ordinateur et l'utilisation des flèches de défilement ou de tabulations.

Il existe plusieurs technologies d'écrans tactiles. L'invention s'applique indifféremment à toutes les technologies.

On distingue en particulier les écrans à détection optique, acoustique, capacitive ou résistive. Les écrans à détection optique notamment infrarouge, comportent une matrice d'interrupteurs optiques comportant une diode électroluminescente en relation avec un phototransistor. Un stylet vient couper, à un point de contact avec l'écran, le faisceau lumineux. L'absence de lumière est détectée par le phototransistor. Un signal de détection, en relation avec les coordonnées du phototransistor désigne une zone de l'écran.

Les écrans à détection acoustique comportent une génération d'une onde acoustique. Lorsqu'un stylet vient au contact de l'écran, il modifie à cet endroit l'impédance acoustique. Il absorbe une partie de l'énergie de cette onde. Cette absorption est détectée par un dispositif de contrôle électronique qui désigne en correspondance une zone de l'écran.

Les écrans à détection capacitive comporte une dalle diélectrique, en verre, recouverte d'un revêtement métallique mince à travers lequel circule un courant faible. Le contact d'un stylet conducteur entraîne une légère augmentation du courant. Les coordonnées du contact sont mesurées à partir de la mesure de ce courant aux quatre coins de ce dispositif.

Les écrans à détection résistive comportent deux membranes transparentes recouvertes d'un film mince métallique et séparées par des cales d'espacement isolantes. Les deux membranes sont alimentées tour à tour par une tension continue constante. Aux points de contact, une connexion s'établit entre les deux membranes. Sa détection permet de déterminer les coordonnées de la zone de contact.

On distingue ainsi pour ces différentes technologies d'écran, celles dans lesquelles l'action détectée est la présentation devant l'écran d'un obstacle, modifiant une impédance (acoustique, électrique ou électromagnétique), et celles dans lesquelles l'action détectée est un effort mécanique de déformation, si petit soit-il, de l'écran.

Il apparaît maintenant nécessaire de produire des équipements mixtes, c'est-à-dire possédant à la fois un écran tactile et un clavier mécanique. Ce type d'utilisation est par exemple demandé quand, en certaines occasions, on ne veut pas ou on ne peut pas voir l'écran, par exemple pour les aveugles. A cet effet, les solutions existantes de téléphone mobile consistent soit à placer les touches du clavier sur le dos des appareils soit à les munir d'un volet et à installer les touches sur le volet. Le volet se glisse ou se rabat normalement sur l'écran pour le protéger et pour diminuer l'encombrement du téléphone mobile. Dans cette demière solution, la sélection des touches peut se faire soit volet fermé soit volet ouvert. Auquel cas, les touches apparaissent respectivement à l'extérieur ou à l'intérieur du volet, les parties de ce volet qui sont visibles de l'utilisateur lorsque ce volet est respectivement fermé ou ouvert. Dans le cas où le volet serait fermé, celui-ci peut masquer en totalité ou en partie seulement l'écran, de telle façon qu'une partie des indications mentionnées par celui-ci reste lisible pour l'utilisateur.

La solution volet fermé, de préférence avec masquage partiel de l'écran, est particulièrement utile et bien adaptée à l'utilisation. La réalisation d'un téléphone mobile aménagé de cette façon présente cependant des difficultés. En effet, le clavier installé dans le volet ne peut être relié au téléphone mobile que par une nappe de fils qui passent dans la charnière de rabattement du volet sûr le téléphone mobile. Or l'expérience montre qu'un nombre important d'ouvertures et de fermetures de ce volet conduit à une détérioration de cette nappe et que cette solution n'est donc pas fiable.

Le but de l'invention est d'apporter une solution à ce problème de fiabilité d'une manière définitive. Le principe de l'invention consiste tout simplement à supprimer la nappe de connexions électriques puisque c'est elle qui est le siège des pannes. Dans l'invention on utilise le fait que l'écran soit un écran tactile et on s'en sert comme unique organe de commandes fonctionnelles du téléphone mobile. Le volet du téléphone mobile de l'invention est alors muni de passages, notamment de passages souples, pour transmettre à travers lui des actions, efforts de pression ou présentations, à des zones sensibles de l'écran tactile situées en regard. Lorsqu'on appuie en particulier sur les passages souples, l'effort ou la présence se transmettent à l'écran tactile qui exécute les fonctions correspondant à l'action entreprise. Un téléphone selon l'invention comporte aussi un détecteur de position ouverture/fermeture du volet. De tels détecteurs sont connus des documents WO 98/15094 et GB 2297662. Ces détecteurs nécessite cependant des aménagement mécanique, ce qui réduit la fiabilité du téléphone.

L'invention a donc pour objet un téléphone mobile muni d'un écran, d'un volet et d'un système informatique commandé par un programme, comportant un détecteur d'ouverture ou de fermeture du volet, des fonctions du téléphone étant dépendantes de l'état ouvert ou de fermé du volet, caractérisé en ce que le détecteur d'ouverture et de fermeture du volet est un détecteur optique monté dans l'écran.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : la représentation en perspective d'un téléphone mobile selon l'invention ;
- Figures 2a à 2d : des particularités de réalisations des passages souples du volet du téléphone mobile de l'invention.

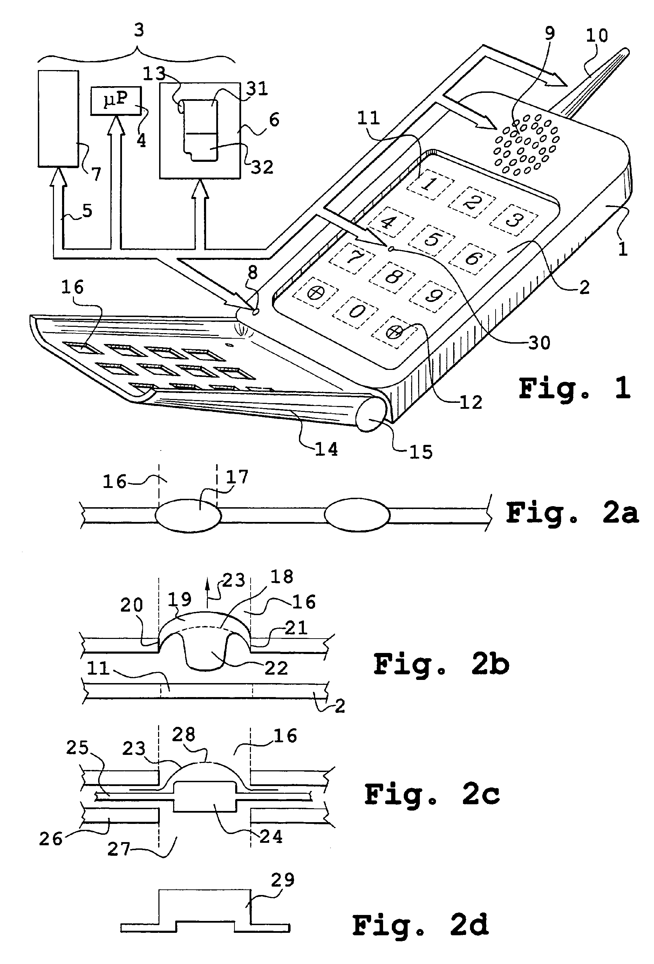

La figure 1 montre un téléphone mobile 1 muni d'un écran 2. L'écran 2 est un écran tactile. Dans un exemple préféré l'écran 2 occupe presque toute la face avant du téléphone mobile 1, celle qui est au contact de l'utilisateur quand il parle avec le téléphone mobile. Le téléphone mobile 1 comporte par ailleurs un système informatique 3 muni d'un microprocesseur 4 relié par un bus 5 à une mémoire programme 6, une mémoire de travail 7, un microphone 8, un haut-parleur 9 et des moyens d'émission réception 10. L'écran tactile 2 permet en appuyant sur des touches telles que 11 à 12 de sélectionner des fonctions du téléphone mobile et notamment d'entrer en communication avec un interlocuteur distant et d'échanger des paroles avec lui. Pour ce faire un programme 13 contenu dans la mémoire 6 gère à la fois les périphériques 6 à 12 du téléphone mobile et les différentes utilisations possibles.

Le téléphone mobile de l'invention comporte également un volet 14. Le volet 14 peut être manoeuvré par coulissement, ou par rotation autour d'une charnière 15, pour venir masquer l'écran 2. Notamment si l'écran est tactile, le volet 14 a pour objet de protéger l'écran 2. L'invention s'applique tant aux volets coulissants qu'aux volets rabattus. De préférence lors du masquage de l'écran seul une partie inférieure de l'écran est masquée.

Selon une caractéristique essentielle de l'invention, lorsque le volet 14 masque l'écran 2, il possède des passages 16 pour permettre la transmission d'une action, par exemple un effort de pression, sur des zones sensibles de l'écran tactile. Par exemple d'une manière très simple le volet 14 peut posséder des trous 16 situés en regard chacun d'une ou de certaines des zones sensibles 11 à 12 de l'écran 2. Il peut ainsi n'y avoir des passages de transmission que face à une partie des zones de l'écran 2.

Dans une variante préférée de réalisation, les trous seront équipés avec des obturateurs, notamment avec des dispositifs souples comme montrés dans les figures 2a à 2d. Sur les figures 2a et 2b, chaque trou 16 peut être muni d'une pastille en silicone. Sur la figure 2a, une pastille 17, vue en coupe a une forme elliptique pour dépasser sur la face exteme du volet 14 (afin que l'utilisateur en reconnaisse le relief), et sous une face interne du volet 14 (afin de s'approcher le plus possible des zones 11-12 et réduire la course nécessaire lors d'un appui). Vue en plan les pastilles peuvent avoir toutes les formes désirées compte tenu d'une présentation esthétique recherchée : être carrées, rectangulaires, rondes, ovales et ainsi de suite.

En utilisant cette réalisation particulièrement simple, les pastilles 17 d'obturation des trous auront néanmoins plutôt la forme 18 représentée sur la figure 2. La forme 18 de ces pastilles est alors constituée d'une coupelle 19 qui prend appui de part et d'autre 20 et 21 sur les chants des trous 16 et une bosse 22 située, à l'intérieur de la coupelle, sensiblement à son milieu. La forme de la coupelle 19 tend naturellement à tirer la bosse 22 dans une direction 23 qui l'écarte de l'écran tactile sous-jacent 2. Dans la position fermée du volet il existe un écart, par exemple de 1/10^{ème} de millimètres, entre la bosse 22 et l'écran 2. Lorsqu'on appuie sur la coupelle 19 dans le sens inverse à la direction 23, la bosse 22 vient appuyer sur une zone 11 de l'écran 2. Les circuits 4 à 12 du téléphone mobile détectent alors cette pression ou cette présence proche de la bosse 22 et provoquent une action correspondante.

Sur la figure 2c on a montré une réalisation préférée des obturateurs souples placés dans les passages 16. Ceux-ci comportent, en empilage, à l'aplomb des passages 16, une touche 23 superposée à une bosse 24, réalisée dans une feuille souple 25, et une feuille semi-rigide 26 munie de trous 27. Par exemple la touche 23 a une forme de coupelle. La coupelle 23 peut être creuse et posséder un orifice 28. Elle est elle-même souple comme la coupelle 19 de la pastille 18. Cette coupelle 23 vient appuyer sur la bosse 24. La bosse 24 va alors passer au travers du trou 27 de la feuille 26 pour venir appuyer ou se présenter sur une zone de l'écran tactile (non représentée). En absence d'appui, la surface de la bosse 24 affleure la feuille 26 et le sommet de la coupelle 23 dépasse de la face externe du volet 14. Dans un exemple, la touche mobile 23 est en métal, la bosse 24 et la feuille souple 25 sont en élastomère, la feuille semi-rigide 26 est en polycarbonate. La feuille 26 est collée de place en place, ou sur ses bords, au volet 14 pour maintenir l'ensemble de ces pièces. Au besoin les coupelles 23 sont aussi portées par une feuille placée en position intermédiaire dans l'empilage.

En variante, figure 2d, la touche 23 peut être remplacée par un bouton 29 dont la partie supérieure est destinée à passer au travers des trous 16. Dans ce cas la souplesse de l'obturation est uniquement provoquée par la souplesse de la bosse 24. La solution avec la coupelle 18 ou la coupelle 23 peut être préférée parce qu'elle provoque une sensation particulière à l'enfoncement. En effet avec une telle coupelle, l'effort d'enfoncement est appliqué sur une partie de la course d'enfoncement avant que, du fait du retournement de la coupelle, la résistance de celle-ci baisse sensiblement. Cette variation de résistance est perçue par l'utilisateur comme une confirmation de la réalisation de l'appui.

Par contre dans le cas de la figure 2a, ou de la figure 2b, cette perception soit n'existe pas soit doit être créée par d'autres moyens. Par exemple, on peut afficher sur une partie qui reste visible de l'écran 2 après que le volet ait été rabattu un numéro ou un symbole alphanumérique représentatif de la fonction appuyée. Au besoin on peut provoquer avec le haut-parleur 19 l'émission d'un court signal sonore (bip). Avec les solutions des figures 2b et 2c, notamment dans le cas de la figure 2c, on peut obtenir l'émission d'un bruit naturel (plop) rien qu'avec le basculement de compression de la coupelle.

Selon l'invention, on perfectionne encore ces dispositifs en disposant dans le téléphone mobile un détecteur d'ouverture du volet 14. Ce détecteur peut être un détecteur de type fin de course, monté dans la charnière 15. Il peut être également un détecteur optique 30 monté dans l'écran 2 et détectant par la présence de lumière l'ouverture du volet 14.

Dans la pratique le détecteur 30 peut être réalisé à l'aide d'une diode 30 infrarouge située dans l'écran et d'une surface réfléchissante placée en vis à vis de cette diode 30 sur la face interne du couvercle 14. La diode infrarouge peut émettre et recevoir des infrarouge. Lorsque le couvercle est fermé la surface réfléchissante renvoie à la diode le faisceau infrarouge qu'elle a émis. La diode détecte alors que le couvercle 14 est fermé. Si le couvercle 14 est ouvert, il n'y a pas réflexion du faisceau infrarouge, la diode 30 ne reçoit donc pas de signal suite à l'émission d'un faisceau infrarouge. Dans une variante de l'invention le détecteur 30 comporte un phototransistor intégré dans du silicium amorphe utilisé dans les technologies d'écran LCD. Lorsque l'écran est ouvert la lumière arrivant sur le détecteur 30 rend le transistor passant ce qui indique au microprocesseur 4 que le couvercle est ouvert. En effet le détecteur 30 est connecté au bus 5, un changement de son état peut donc déclencher une routine d'interruption par exemple. Lorsque l'écran est fermé le transistor change à nouveau d'état. Dans le cas d'une réalisation avec un phototransistor, on peut améliorer l'invention en prévoyant deux phototransistors placés à des endroits différents de l'écran, ceci afin de palier aux obscurcissements dus aux doigts de l'utilisateur.

Selon que le volet sera ouvert ou fermé, en fonction du signal du détecteur d'ouverture, le programme 13 comportera une partie 31 ou 32 qui sera mise en oeuvre par le microprocesseur 4 pour définir les fonctions des zones sensibles 11 à 12. Par exemple, lorsque le volet 14 est ouvert ces fonctions peuvent être très variées. Par contre lorsque le volet sera fermé ces fonctions peuvent être plus limitées à une seule fonction par touche. Cette fonction peut être limitée à celle correspondant à une indication portée par ailleurs sur chacune des pastilles 17, 18 ou boutons 23 ou 29. En variante, l'écran 2 est suffisamment lumineux, même fermé, pour que les pastilles 17 ou 23, translucides, laissent passer une information imposée par l'écran 2. Dans ce dernier cas les fonctions de celles-ci ne sont pas limitées.

## Revendications

1. Téléphone mobile (1) muni d'un écran (2), d'un volet (14) et d'un système (3) informatique commandé par un programme, comportant un détecteur optique (30) d'ouverture ou de fermeture du volet, des fonctions du téléphone (31, 32) étant dépendantes de l'état ouvert ou fermé du volet, **caractérisé en ce que** le détecteur d'ouverture et de fermeture du volet est monté dans l'écran.

2. Téléphone selon la revendication 1, **caractérisé en ce que** l'écran est tactile, et **en ce que** le volet comporte des passages (16) pour transmettre une action sur des zones (11, 12) sensible de l'écran tactile, les zones sensibles de l'écran étant dépendantes de l'état ouvert ou fermé du volet.

3. Téléphone selon la revendication 2, **caractérisé en ce que** l'écran tactile est du type mécanique et **en ce que** l'action est une pression.

4. - Téléphone selon la revendication 2, **caractérisé en ce que** l'écran tactile est du type électromagnétique et **en ce que** l'action est une présentation d'une impédance électrique ou électromagnétique.

5. Téléphone selon la revendication 2, **caractérisé en ce que** l'écran tactile est du type acoustique et **en ce que** l'action est une présentation d'une impédance acoustique.

6. Téléphone selon la revendication 2, **caractérisé en ce que** l'écran tactile est du type optique et **en ce que** l'action est une modification de la transmission d'une onde lumineuse.

7. Téléphone mobile selon l'une des revendications 1 à 6, **caractérisé en ce que** le volet est rotatif (15).

8. Téléphone mobile selon l'une des revendications 1 à 7, **caractérisé en ce que** le volet est coulissant

9. Téléphone mobile selon l'une des revendications 1 à 8, **caractérisé en ce que** les passages comportent chacun un obturateur souple à variation de sensation d'enfoncement (18, 23).

10. Téléphone mobile selon la revendication 9, **caractérisé en ce qu'**un obturateur souple comporte un empilage d'une touche mobile (23, 29), d'une bosse (24) dans une feuille (25) souple et d'un trou (27) dans une feuille (26) semi-rigide.

11. Téléphone mobile selon la revendication 10, **caractérisé en ce que** la feuille souple est en élastomère.

12. Téléphone selon l'une des revendications 10 ou 11, **caractérisé en ce que** la feuille semi-rigide est en polycarbonate.

13. Téléphone mobile selon l'une des revendications 9 à 12, **caractérisé en ce que** l'obturateur est bruyant quand on le manoeuvre.

## Claims

1. A mobile telephone (1) equipped with a screen (2), a panel (14) and a data processing system (3) controlled by a program, comprising an optical detector (30) for opening or closing the panel and telephone functions (31, 32) responsible for the open or closed state of the panel, **characterized in that** the opening and closing detector of the panel is mounted in the screen.

2. The telephone according to claim 1, **characterized in that** the screen is tactile, and **in that** the panel comprises passages (16) for transmitting an action to the sensitive areas (11, 12) of the tactile screen, the sensitive areas of the screen being responsible for the open or closed state of the panel.

3. The telephone according to claim 2, **characterized in that** the tactile screen is of the electromagnetic type and **in that** the action is a pressure action.

4. The telephone according to claim 2, **characterized in that** the tactile screen is of the electromagnetic type and **in that** the action is a presentation of electric or electromagnetic impedance.

5. The telephone according to claim 2, **characterized in that** the tactile screen is of the acoustic type and **in that** the action is a presentation of acoustic impedance.

6. The telephone according to claim 2, **characterized in that** the tactile screen is of the optical type and **in that** the action is a modification of the transmission of a wave light.

7. The mobile telephone according to one of claims 1 to 6, **characterized in that** the panel is rotating (15).

8. The mobile telephone according to one of claims 1 to 7, **characterized in that** the panel is sliding.

9. The mobile telephone according to one of claims 1 to 8, **characterized in that** the passages each comprise a pressure sensation variation flexible cover (18, 23).

10. The mobile telephone according to claim 9, **characterized in that** the flexible cover comprises a mobile key (23, 29) of a boss (24) in a flexible sheet (25) and a hole (27) in a semi-rigid sheet (26) in a stack.

11. The mobile telephone according to claim 10, **characterized in that** the flexible sheet is in elastomer.

12. The telephone according to one of claims 10 or 11, **characterized in that** the semi-rigid sheet is in polycarbonate.

13. The mobile telephone according to one of claims 9 to 12, **characterized in that** the cover emits a sound when it is operated.

## Patentansprüche

1. Mobiltelefon (1), das mit einem Display (2), einer Klappe (14) und einem EDV-System (3), das von einem Programm gesteuert wird, versehen ist, das einen optischen Detektor (30) des Öffnens oder Schließens der Klappe aufweist, wobei Funktionen des Telefons (31, 32) von dem offenen oder geschlossenen Zustand der Klappe abhängen, **dadurch gekennzeichnet, dass** der Öffnungs- und Schließdetektor der Klappe in das Display installiert ist.

2. Telefon nach Anspruch 1, **dadurch gekennzeichnet, dass** das Display berührungsempfindlich ist, und **dadurch**, dass die Klappe Durchgänge (16) aufweist, um eine Aktion auf empfindliche Zonen (11, 12) des berührungsempfindlichen Displays zu übertragen, wobei die empfindlichen Zonen des Displays von dem offenen oder geschlossenen Zustand der Klappe abhängen.

3. Telefon nach Anspruch 2, **dadurch gekennzeichnet, dass** das berührungsempfindliche Display des mechanischen Typs ist, und dass die Aktion ein Druck ist.

4. Telefon nach Anspruch 2, **dadurch gekennzeichnet, dass** das berührungsempfindliche Display des elektromagnetischen Typs ist, und **dadurch**, dass die Aktion eine Präsentation einer elektrischen oder elektromagnetischen Impedanz ist.

5. Telefon nach Anspruch 2, **dadurch gekennzeichnet, dass** das berührungsempfindliche Display des akustischen Typs ist, und **dadurch**, dass die Aktion eine Präsentation einer akustischen Impedanz ist.

6. Telefon nach Anspruch 2, **dadurch gekennzeichnet, dass** das berührungsempfindliche Display des optischen Typs ist, und **dadurch**, dass die Aktion eine Änderung der Übertragung einer Lichtwelle ist.

7. Mobiltelefon nach einem der Ansprüche 1 bis 6, **dadurch gekennzeichnet, dass** die Klappe drehend (15) ist.

8. Mobiltelefon nach einem der Ansprüche 1 bis 7, **dadurch gekennzeichnet, dass** die Klappe gleitend ist.

9. Mobiltelefon nach einem der Ansprüche 1 bis 8, **dadurch gekennzeichnet, dass** die Durchgänge jeweils einen biegsamen Verschluss mit Variation der Eindrückempfindung (18, 23) aufweisen.

10. Mobiltelefon nach Anspruch 9, **dadurch gekennzeichnet, dass** ein biegsamer Verschluss eine Stapelung einer mobilen Taste (23, 29), eines Höckers (24) in einem biegsamen Blatt (25) und eine Bohrung (27) in einem halbstarren Blatt (26) aufweist.

11. Mobiltelefon nach Anspruch 10, **dadurch gekennzeichnet, dass** das biegsame Blatt aus Elastomer besteht.

12. Mobiltelefon nach einem der Ansprüche 10 oder 11, **dadurch gekennzeichnet, dass** das halbstarre Blatt aus Polycarbonat besteht.

13. Mobiltelefon nach einem der Ansprüche 9 bis 12, **dadurch gekennzeichnet, dass** der Verschluss beim Handhaben ein Geräusch abgibt.
